# EUROPEAN PATENT SPECIFICATION

(11) **EP 0 564 518 B1**
(45) Date of publication and mention of the grant of the patent: **15.11.1995**
(21) Application number: 92901731.7
(22) Date of filing: 24.12.1991
(51) Int. Cl.: B60R 21/16

(54) **AIRBAG**
GASSACK
COUSSIN PNEUMATIQUE DE SECURITE

(30) Priority: 28.12.1990 GB 9028173
(43) Date of publication of application: 13.10.1993
(73) Proprietor: AIRBAGS INTERNATIONAL LIMITED, Leek ST13 6BB (GB)
(72) Inventor: PINEDA, Fransesc 3 Bollin Drive, Cheshire CW12 3RR (GB)
(74) Representative: Wharton, Peter Robert
(86) International application number: GB9102322
(87) International publication number: WO9212028

(56) References cited:
- EP-A- 0 364 267
- WO-A-90/09295
- US-A- 3 879 056

## Description

The present invention relates to an airbag and to a method of making an airbag. Such an airbag might be inflated and used, for example, for the protection of occupants of a vehicle in the event of a collision.

Inflatable airbags are being used increasingly in vehicles as safety restraints for use in the event of a collision. Such bags might be stowed in front of a passenger, and arranged to inflate rapidly in the event of a collision, so as to restrain the passenger and to prevent him or her from being thrown against hard surfaces within the vehicle and therefore from being injured. Such airbags have commonly been made from polyamide fabric, which might be coated with a layer of a gas impermeable material such as a chlorobutadiene rubber. However, a disadvantage of airbags forms from such materials is that they are relatively expensive to produce. Furthermore, they tend generally to be relatively bulky, which can make it difficult to store them in front of a passenger in a vehicle.

More recently, it has been proposed to form airbags by weaving upper and lower fabrics simultaneously, the fabrics being woven together in selected regions so as to define and to enclose at least partially between them a space. It has been found that circular airbags can be formed in this way, and the resulting airbags have been found to be significantly less bulky than earlier airbags formed from coated fabrics, and to be capable of manufacture relatively cheaply. Such airbags are disclosed in our W0-A-90/09295. The subject matter disclosed in that document is incorporated in this specification by this reference to the document.

Airbags disclosed in W0-A-90/09295 are provided with internal straps which extend between the upper and lower fabrics. The straps can control the configuration of the bag when it is inflated. The straps may be provided in a material which is stronger and resistant to shrinkage on exposure to heat. Such fibres may be woven into the upper and lower fabrics at the initial weaving stage. By appropriate selection of a material for the upper and lower fabrics, a heat treatment step can be used to force the upper and lower fabrics to shrink, so that the straps formed from shrink resistant material become loose.

The configuration of the airbag when inflated can be adjusted by changing the points of contact between the straps and the upper and lower fabrics, by appropriate adjustment of the weave programme.

The present invention provides an airbag which includes internal straps for control of the configuration of the bag when inflated which are interconnected. The straps confer significant advantages on the airbag and on techniques by which it might be manufactured.

Accordingly, in one aspect, the invention provides an airbag, comprising upper and lower woven fabrics which are woven together in selected regions so as to define and to enclose at least partially between them a space, at least two straps being provided within the bag to control its configuration when inflated, the straps being connected to one another at a point between their ends, the ends of a first one of the straps being connected to one of the fabrics, and the ends of a second one of the straps being connected to the other of the fabrics.

It has been found that the airbag of the invention has significant advantages compared with airbags in which straps passed directly between two woven fabrics, and are not interconnected. In particular, the present invention allows the configuration of an inflated airbag to be controlled more precisely and conveniently than with previously known airbags. For example, the configuration can be adjusted by appropriate selection of variables such as:
(a) the anchorage points of the straps on the fabrics; and
(b) the lengths of the straps.
(c) shrinkage potential of the yarns: none, high or low
The configuration of the inflated bag may also be controlled by appropriate selection of the number, lengths and positions of the straps by which the upper and lower fabrics are interconnected.

The straps may be connected to one another directly without use of another component, as a result of one of the straps passing through the other of the straps. However, for many applications, it can be preferred to connect the straps together by means of a connector element.

It is particularly preferred that the straps be connected to one another by means of a connector element. This has the particular advantage that it allows an airbag to be formed by weaving with straps extending between its upper and lower fabrics, and with the seam at which the upper and lower fabrics are joined located within the bag. This result can be achieved by weaving the upper and lower fabrics together so as to define a space, with the straps provided on the outer exposed surfaces of the fabrics. The resulting bag can then be turned inside out, so that the seam and the straps are provided on what becomes the internal surfaces of the bag.

The possibility of providing an airbag with its seam within it has the significant advantage that the tendency of the fabrics to fray at their edges around the seam is significantly reduced, so that the tendency of the seam to open is also reduced. A further advantage of this embodiment is that, with the seam at which the upper and lower fabrics are joined being inside the airbag, the risk of injury in the event of impact between the bag and a person, for example in a collision involving a vehicle in which that person is a passenger, arising from abrasive contact with a hard edge of such a seam, is significantly reduced. The present invention allows this advantage to be realised, in an airbag in which straps are provided extending between the upper and lower fabrics

The connector element by which the first and second straps are connected to one another may be rigid or flexible. It may be relatively small so that the straps are held against one another, in which case it could be, for example, a clip or a flexible tie. Otherwise, it may be relatively long so that the first and second straps are connected to one another, but remain a certain distance apart. Such a connector element might be provided by, for example, a connector strap, which may be formed of the same material as the first and second straps so that it is flexible. The use of a relatively long connector element has the advantage that the configuration of the resulting inflated bag can be controlled yet further by adjustment of the length of the connector element. In this arrangement, the straps can be relatively short, so that they provide little more than just anchorage points for the ends of the connector element.

The materials of the straps and from which the woven fabrics are formed may be the same. However, it is preferred that the materials are different. For example, the material of the straps may be resistant to shrinkage when exposed to heat, while the material from which the fabrics are woven may be unstable so that they shrink to a small extent when exposed to heat. This allows straps to be incorporated into the fabrics as the fabrics are woven, and subsequently to be made slack by an appropriate heat treatment of the fabric so that the straps can allow the bag to expand on inflation.

The materials from which the fabrics are woven will generally be polymeric, such as a polyamide or a polyester, or a polyolefins (for example polyethylene and polypropylene). Examples of other materials for the fibres from which the fabrics are woven include aramids, carbon, glass and ceramic, as well as appropriately treated natural fibres.

The materials for the straps may also be selected from the lists set out above.

A factor which can, in some situations, affect the choice of material for the straps is that they should be capable of withstanding the heat which is generated when the airbag is inflated. When the airbag is used for the protection of occupants of a vehicle in the event of a collision, inflation can take place rapidly, by means of a gas which is supplied to the bag explosively. Considerable heat can be generated on inflation, and it is important that the straps by which the configuration of the inflated bag is controlled be able to withstand that heat, in order to prevent failure when the bag is inflated.

Fusible fibres may be provided in at least an edge region of the airbag in which fibres from which the fabrics are formed to run approximately tangential to that edge. Such fusible fibres can reduce fraying of the fibres of the fabrics once exposed to heat to cause them to fuse. Airbags which include such fusile fibres are disclosed in the application which is being filed on the same day as this application and which bears the reference GB-A-2 251 410.

The invention includes methods of making airbags. A preferred method comprises:
(a) weaving upper and lower fabrics simultaneously, the fabrics being woven together in selected regions so as to define and to enclose at least partially between them a space, each of the fabrics having woven in it a strap which is loose relative to the fabric, and which is provided on the outer surface of its respective fabric;
(b) turning the bag formed from the woven fabrics inside-out, so that the straps are on the inside of the bag; and
(c) connecting the straps to one another.

Appropriate techniques for weaving the upper and lower fabrics of the airbag are disclosed in WO-A-90/09295. Among those techniques is one in which a succession of airbags are formed adjacent to one another from upper and lower fabrics, a selvage being provided along the edges of the fabrics extending in the warp direction.

The airbag of the present invention may be square. Preferably, it has a non-square shape, especially a generally rounded shape such as a circular shape. The formation of an airbag which has a generally rounded shape has the advantage that it is somewhat less bulky than might otherwise be the case.

When the airbag is provided with straps in the form of fibres, such as fibres which are woven into the upper and lower fabrics of the bag, each strap may comprise a single fibre or, for some applications, a plurality of fibres, which may be woven or interlaced in some other way. The use of a plurality of fibres has the advantage that the straps are better able to withstand loads which are applied when the bag is inflated. Each of the straps may be formed as one or more lengths. For example, each strap may be formed in two sections which may be connected to one another after the sections have been connected to their respective fabric. In one embodiment, for example, an airbag may be provided with two straps which are connected to one another at their midpoints, each of the straps being formed on two sections of approximately equal length which are themselves joined together.

The orientation of the straps on their respective fabrics will depend on, amongst other things, the way in which they are connected to one another. When the straps are connected to one another by one of the straps passing through the other, the two straps will generally be arranged approximately perpendicular to one another. In this case, it will generally be convenient for one of the straps to be provided in the weft direction of its respective fabric, while the other of the straps is provided in the warp direction of its fabric. However, even when connected by one of the straps passing through the other, the two straps may be arranged approximately parallel to one another if desired. When the straps are connected to one another by means of a connector element, the straps will generally be arranged approximately parallel to one another, so that, for example, both extend in the warp direction of their respective fabrics, or both extend in the weft direction of their respective fabrics.

Embodiments of the present invention will now be described by way of example with reference to the accompanying drawings, in which:
Figure 1 is a sectional elevation through an airbag;
Figure 2 is a plan view of the airbag shown in figure 1;
Figure 3 consists of three sectional elevations through an airbag, in successive stages of manufacture; and
Figure 4 consists of two sectional elevations through an airbag, in successive stages of manufacture.

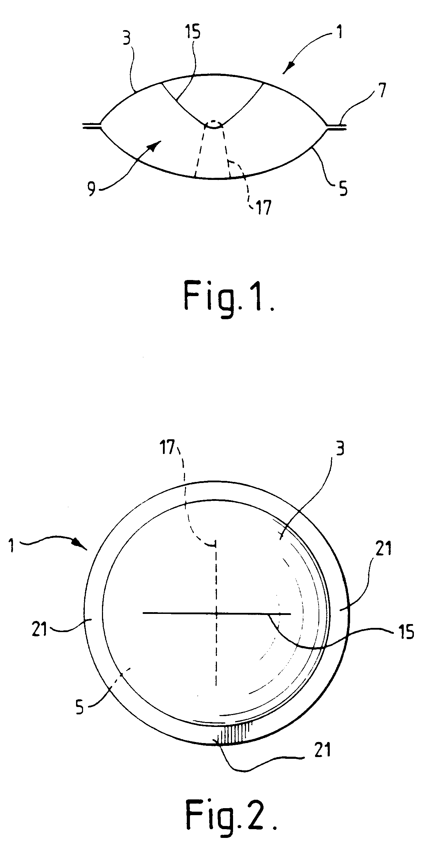

Referring to the drawings, figures 1 and 2 show an airbag 1 comprising an upper woven fabric 3 and a lower woven fabric 5. The upper and lower fabrics are woven together in an edge region 7 so as to define and to enclose between them a space 9. A first strap 15 is connected at each of its ends to the upper fabric 3. The strap extends in the warp direction of the fabric, and is woven into the fabric. A second strap 17 is connected at each of its ends to the lower fabric 5, the second strap also being connected by being woven into the fabric, and extending in the weft direction of the fabric.

The first strap 15 is connected to the second strap 17 as a result of the first strap passing through the second strap. When the bag is inflated (as a result of supply of gas through an opening - not shown), the first and second straps 15, 17 control the configuration of the bag.

The material of the fibres from which the upper and lower woven fabrics 3, 5 are formed is a polyamide. The material of the first and second straps 15, 17 is an aramid, such as that sold under the trade mark KEVLAR. Polyethylene fibres are incorporated in the four edge regions 21 in which the fibres of the upper and lower fabrics (either weft or warp) run approximately tangential to that edge.

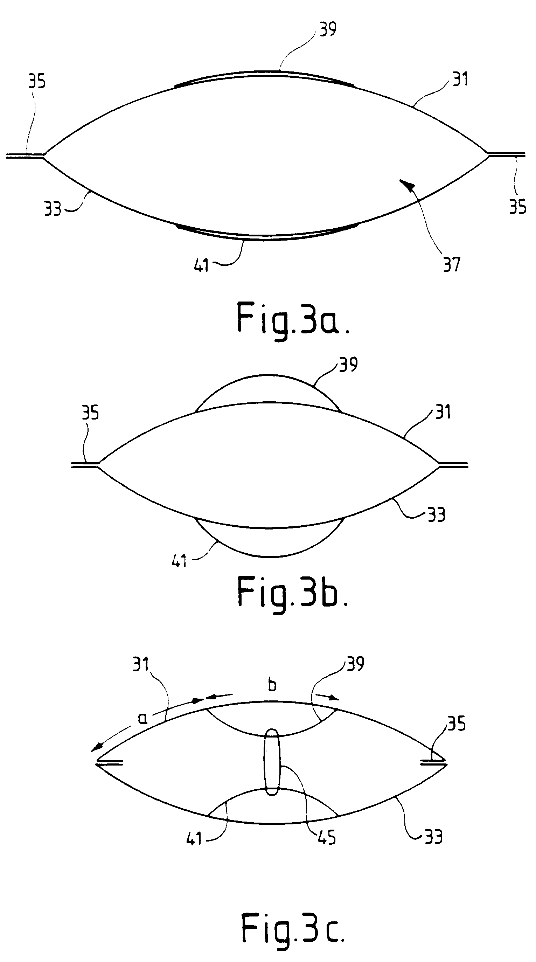

Figure 3 shows an airbag at successive stages in its manufacture. Figure 3a shows upper and lower woven fabrics 31, 33, which are woven together in an edge region 35 so as to define and to enclose between them a space 37. A first strap 39 is provided on the outer surface of the upper woven fabric 31, and a second strap 41 is provided on the outer surface of the lower woven fabric 33. The materials of the straps, and of the woven fabrics 31, 33, are selected so that exposure of the bag to an elevated temperature causes its configuration to change from that shown in figure 3a (in which the straps 39, 41 are relatively tight) to that shown in figure 3b (in which the straps 39, 41 are relatively loose relative to the fabrics). This can be achieved by use of a heat unstable fibre to form the upper and lower woven fabrics 31, 33, and by using a heat stable material for the straps 39,41.

Before or after the heat treatment step, the bag is turned inside out. Access to the inside of the bag during this step can be reached through an aperture through which, when the bag is in use, a gas is supplied to cause it to inflate. When the bag is woven in such a way that that opening also shrinks when the bag is exposed to heat, it will be preferred to turn the bag inside out before the heat treatment step.

Figure 3c shows the bag after is has been turned inside out. A connector element 45 in the form of a flexible strap is provided to connect the first strap 39 to the second strap 41. Access to the first and second straps 39, 41 to connect them by means of the connector element 45 can be gained through the opening through which gas for inflation is supplied.

It will be seen that, as a result of turning the bag inside out, the edge region 35 at which the upper and lower fabrics 31, 33 are joined is located inside the bag, so that the risk of injury to a person on impact with the bag, arising from a hard edge region, is significantly reduced.

The configuration of the air bag shown in figure 3, once it has been inflated, can be controlled by appropriate adjustment of a number of variables. These include the number of first and second straps provided on each of the upper and lower woven fabrics 31, 33, the positions at which the first and second straps 39, 41 are connected to the fabrics 31, 33 (by adjusting the distance a and b), and the length of the connector element 45.

A flexible connector element such as that shown in figure 3c is preferred since it occupies a small amount of space within the bag when it is collapsed, and is unlikely to damage either the bag (when collapsed), or a person in the event of impact.

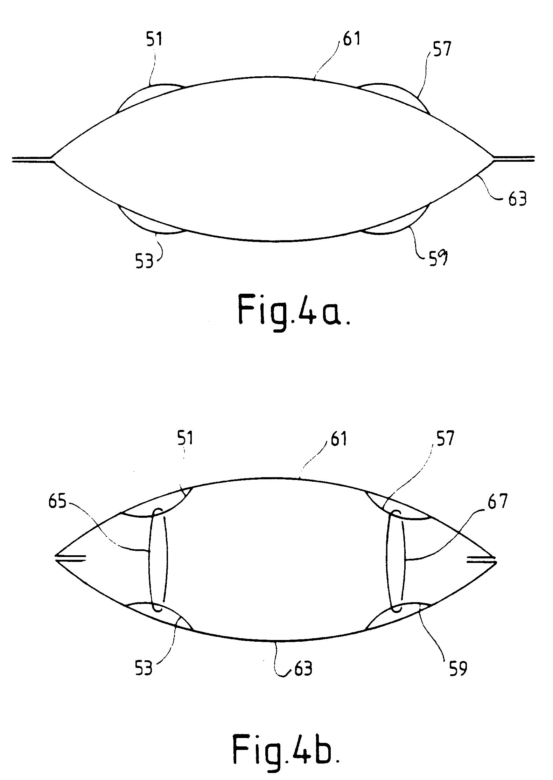

The embodiment of the air bag shown in figure 4 differs from that shown in figure 3 in that is includes two pairs of straps, 51,53, and 57, 59, a strap of each pair being provided on the upper and lower fabrics 61, 63 respectively. The straps of each pair are relatively short, and are interconnected by means of flexible connector elements 65,67.

## Claims

1. An airbag (1) comprising upper (3; 31; 61) and lower (5; 33; 63) woven fabrics which are woven together in selected regions so as to define and enclose at least partially between them a space (37, 9), at least two straps (15, 17; 39, 41; 51, 53; 57, 59) being provided within the bag to control its configuration when inflated, characterized therein, that the straps (15, 17; 39, 41; 51, 53; 57, 59) being connected to one another at a point between their ends, the ends of a first one of the straps (15; 39; 51; 57) being connected one of the fabrics (3; 31; 61) and the ends of a second one of the straps (17; 41; 53; 59) being connected to the other of the fabrics (5; 33; 63).

2. A bag as claimed in claim 1 in which the straps are connected to one another as a result of one of the straps (15, 17) passing through the other of the straps (17, 15).

3. A bag as claimed in claim 1 in which the straps are connected together by means of a connector element (45; 65; 67).

4. A bag as claimed in claim 3 in which the connector element (45; 65; 67) is rigid or flexible.

5. A bag as claimed in either of claims 3 or 4 in which the connector element (45; 65; 67) is relatively small so that the straps (15, 17; 39, 41; 51, 53, 57, 59) are held against one another.

6. A bag as claimed in either of claims 3 or 4 in which the connector element (45; 65; 67) is relatively long so that the first (15; 39; 51; 57) and second (17; 41; 53; 59) straps are connected together but remain a certain distance apart.

7. A bag as claimed in claim 6 in which the connector element is a connector strap of the same material as the first and second straps.

8. A bag as claimed in any of claims 1 to 7 in which the straps (15 ... 59) are formed from the same material as the woven fabric (3 .... 63).

9. A bag as claimed in any of claims 1 to 7 in which the straps are formed from a different material from the woven fabric.

10. A method of making an airbag comprises:
a) weaving upper (3; 31; 61) and lower (5; 33; 63) fabrics simultaneously, the fabrics being woven together in selective regions so as to define and enclose at least partially between them a space, each of the fabrics having woven in it a strap (15 ... 59) which is loose relative to the fabric, and which is provided on the outer surface of its respective fabric;
b) turning the bag formed from the woven fabrics inside out so that the straps are on the inside of the bag; and
c) connecting the straps (15; 17 .... 57; 59) to one another.

## Patentansprüche

1. Airbag (1), der ein oberes (3; 31; 61) und ein unteres (5; 41; 63) gewebtes textiles Flächengebilde aufweist, die in ausgewählten Bereichen miteinander verwoben sind, um wenigstens teilweise zwischen sich einen Raum (9) zu definieren und einzuschließen, wobei wenigstens zwei Gurte (15, 17; 39, 41; 51, 53; 57, 59)) in dem Airbag vorgesehen sind, um seine Konfiguration im aufgeblasenen Zustand zu kontrollieren, dadurch gekennzeichnet, daß die Gurte (15, 17; 39, 41; 51, 53; 57, 59) an einer Stelle zwischen ihren Enden miteinander verbunden sind, wobei die Enden eines ersten der Gurte (15; 39; 51; 57) mit einem der textilen Flächengebilde (3; 31; 61) und die Enden eines zweiten der Gurte (17; 41; 53; 59) mit dem anderen der textilen Flächengebilde (5; 33; 63) verbunden sind.

2. Airbag nach Anspruch 1, wobei die Gurte miteinander dadurch verbunden sind, daß einer der Gurte (15, 17) durch den anderen der Gurte (17, 15) geführt ist.

3. Airbag nach Anspruch 1, wobei die Gurte durch ein Verbinderelement (45; 65; 67) miteinander verbunden sind.

4. Airbag nach Anspruch 3, wobei das Verbinderelement (45; 65; 67) steif oder flexibel ist.

5. Airbag nach einem der Ansprüche 3 oder 4, wobei das Verbinderelement (45; 65; 67) relativ klein ist, so daß die Gurte (15; 39; 51; 57) in Anlage aneinander gehalten sind.

6. Airbag nach einem der Ansprüche 3 oder 4, wobei das Verbinderelement (45; 65; 67) relativ lang ist, so daß der erste (15; 39; 51; 57) und der zweite Gurt (17; 41; 53; 59) miteinander verbunden sind, aber in einer bestimmten Entfernung voneinander bleiben.

7. Airbag nach Anspruch 6, wobei das Verbinderelement ein Verbindergurt aus dem gleichen Material wie der erste und der zweite Gurt ist.

8. Airbag nach einem der Ansprüche 1 bis 7, wobei die Gurte (15 ... 59) aus dem gleichen Material wie das gewebte textile Flächengebilde (3 ... 63) gebildet sind.

9. Airbag nach einem der Ansprüche 1 bis 7, wobei die Gurte aus einem von dem gewebten textilen Flächengebilde verschiedenen Material gebildet sind.

10. Verfahren zum Herstellen eines Airbags, das folgende Schritte aufweist:
a) gleichzeitiges Weben von oberen (3; 31; 61) und unteren (5; 41; 63) textilen Flächengebilden, die in selektiven Bereichen miteinander verwoben werden, um so wenigstens teilweise zwischen sich einen Raum zu definieren und zu umschließen, wobei in jedes der textilen Flächengebilde ein Gurt (15 ... 59) eingewoben wird, der relativ zu dem textilen Flächengebilde lose ist und an der äußeren Oberfläche seines jeweiligen textilen Flächengebildes vorgesehen ist;
b) Umstülpen des aus den verwobenen textilen Flächengebilden geformten Airbags nach außen, so daß die Gurte an der Innenseite des Airbags sind; und
c) Verbinden der Gurte (15; 17 ... 57; 59) miteinander.

## Revendications

1. Coussin gonflable (1) comprenant des tissus supérieur (3; 31; 61) et inférieur (5; 41; 63) tissés ensemble dans des régions choisies, de manière à définir et enfermer au moins partiellement un espace (9) entre eux, au moins deux bandes (15, 17; 39, 41; 51, 53; 57, 59) étant prévues à l'intérieur du coussin pour contrôler sa configuration une fois gonflé, caractérisé en ce que les bandes (15, 17; 39, 41; 51, 53; 57, 59) sont reliées l'une à l'autre en un point situé entre leurs extrémités, les extrémités d'une première des bandes (15; 39; 51; 57) étant reliées à l'un des tissus (3; 31; 61), et les extrémités d'une deuxième des bandes (17; 41; 53; 59) étant reliées à l'autre des tissus (5; 33; 63).

2. Coussin selon la revendication 1, dans lequel les bandes sont reliées l'une à l'autre par suite de ce que l'une des bandes (15, 17) passe à travers l'autre des bandes (17, 15).

3. Coussin selon la revendication 1, dans lequel les bandes sont reliées l'une à l'autre au moyen d'un élément connecteur (45; 65; 67).

4. Coussin selon la revendication 3, dans lequel l'élément connecteur (45; 65; 67) est rigide ou flexible.

5. Coussin selon la revendication 3 ou 4, dans lequel l'élément connecteur (45; 65; 67) est relativement petit, de sorte que les bandes (15; 39; 51; 57) sont tenues l'une contre l'autre.

6. Coussin selon la revendication 3 ou 4, dans lequel l'élément connecteur (45; 65; 67) est relativement long, de sorte que les première (15; 39; 51; 57) et deuxième (17; 41; 53; 59) bandes sont reliées l'une à l'autre mais conservent une certaine distance entre elles.

7. Coussin selon la revendication 6, dans lequel l'élément connecteur est une bande connectrice du même matériau que les première et deuxième bandes.

8. Coussin selon l'une quelconque des revendications 1 à 7, dans lequel les bandes (15, 17; 39, 41; 51, 53; 57, 59) sont formées dans le même matériau que le tissu (3, 5; 31, 33; 61, 63).

9. Coussin selon l'une quelconque des revendications 1 à 7, dans lequel les bandes sont formées dans un matériau différent du tissu.

10. Procédé de fabrication d'un coussin gonflable, comprenant les étapes consistant à :
(a) tisser simultanément des tissus supérieur (3; 31; 61) et inférieur (5; 41; 63), les tissus étant tissés ensemble dans des régions choisies, de manière à définir et enserrer au moins partiellement un espace entre eux, chacun des tissus ayant une bande (15, 17; 39, 41; 51, 53; 57, 59) tissée avec lui, qui est lâche par rapport au tissu et qui est prévue sur la surface extérieur de son tissu respectif ;
(b) retourner le coussin formé à partir des tissus tissés, endroit à l'envers, de sorte que les bandes se trouvent à l'intérieur du coussin ; et
(c) relier les bandes (15, 17; 39, 41; 51, 53; 57, 59) entre elles.
